Europäisches Patentamt

European Patent Office

Office européen des brevets

(11) Publication number: **0 444 512 A2**

## EUROPEAN PATENT APPLICATION

(21) Application number: **91102436.2**

(22) Date of filing: **20.02.91**

(51) Int. Cl.5: **G11B 27/10, G11B 27/30, H04N 1/21**

(30) Priority: **27.02.90 JP 48854/90**

(43) Date of publication of application:
**04.09.91 Bulletin 91/36**

(84) Designated Contracting States:
**DE FR GB**

(71) Applicant: **ASAHI KOGAKU KOGYO KABUSHIKI KAISHA**
**36-9, Maeno-cho 2-chome Itabashi-ku Tokyo(JP)**

(72) Inventor: **Sato, Yoshiaki, c/o Asahi Kogaku**

Kogyo K. K.
36-9, Maenocho 2-chome
Itabashi-ku, Tokyo(JP)
Inventor: **Sakai, Nobuya, c/o Asahi Kogaku Kogyo K. K.**
36-9, Maenocho 2-chome
Itabashi-ku, Tokyo(JP)

(74) Representative: **Ritter und Edler von Fischern, Bernhard,Dipl.-Ing. et al**
**HOFFMANN - EITLE & PARTNER**
**Arabellastrasse 4**
**W-8000 München 81(DE)**

(54) **Recording and reproducing system.**

(57) A recording and reproducing system for recording and reproducing at least a video signal on a disk. In the system, a video signal and data for a desired reproducing time period for the video signal are recorded on a single track, and the video signal is reproduced during the desired reproducing time period on the basis of the recorded data. In case that video signals are recorded on a plurality of tracks, the number of a next track in which a next video signal following the current video signal is to be recorded is recorded in addition to the current video signal on the current track.

FIG. 6

EP 0 444 512 A2

## BACKGROUND OF THE INVENTION

This invention relates to a recording and reproducing system, for example, an electronic still camera, in which video signals and audio signals are recorded on coaxial tracks of a magnetic disk.

The present disclosure relates to the subject matter contained in Japanese Patent Application No. Hei. 2-48854 (filed on February 27, 1990) which are expressly incorporated herein by reference in its entirety.

An electronic still camera is designed to record video signals and audio signals on tracks of a magnetic disk. More specifically, in a normal mode, the video signals and the audio signals are recorded independently of each other, and in an AV mode, the video signal and the audio signal are recorded on the tracks adjacent to each other in combination. Hence, the video signals and the audio signals recorded in the normal mode are reproduced separately, while the video signal recorded in the AV mode is reproduced simultaneously with the corresponding audio signal.

At the time of reproducing, the operator operates the reproducing device to reproduce each video track for a desired period of time. However, for example, in the case of using the device in a presentation, the operator had to make the reproducing and stop operations for each video track. Such operations are inconvenient. Further, in the AV mode, the audio signal is reproduced with the corresponding video signal. However, it is difficult to balance for reproducing time between the audio signal and the video signal because the audio signal is reproduced for a predetermined time.

However, in a conventional electronic still camera, a reproducing period of time for a video signal cannot be set voluntarily.

## SUMMARY OF THE INVENTION

In view of the foregoing, an object of the present invention is to provide a recording and reproducing system in which a reproducing time for a video signal can be set voluntarily.

A recording and reproducing system according to the invention comprises: set means for setting a desired reproducing time for a video signal to be recorded; trigger switch means; record means for recording the video signal and data for the desired reproducing time on a recording medium, in response to an operation for the trigger switch means; reproduction means for reproducing the video signal and data for the desired reproducing time for the video signal from the recording medium; detection means for detecting the data for the desired reproducing time from the reproduced signal, and control means for causing the reproduction means to reproduce the video signal for the desired reproducing time on the basis of the data detected.

A recording device according to the invention comprises: set means for setting a desired reproducing time for a video signal to be recorded; trigger switch means; and record means for recording the video signal and data for the desired reproducing time on a recording medium, in response to an operation for the trigger switch means.

A reproducing device according to the invention comprises: reproduction means for reproducing a recording medium in which a video signal and data for a desired reproducing time for the video signal; detection means for detecting the data for the desired reproducing time from the recording medium; and control means for causing the reproduction means to reproduce the video signal for the desired reproducing time on the basis of the data detected.

## BRIEF DESCRIPTION OF THE DRAWINGS

Fig. 1 is a perspective view showing an external appearance of a recording and reproducing system according to the invention;

Fig. 2 is a block diagram showing a possible electrical arrangement of the recording and reproducing system according to the invention;

Fig. 3 is a flow chart illustrating an example of the fundamental operation of the recording and reproducing system according to the invention;

Fig. 4 is a flow chart illustrating an example of the signal recording operation of the recording and reproducing system according to the invention;

Fig. 5 is a flow chart illustrating an example of the signal reproducing operation of the recording and reproducing system according to the invention;

Figs. 6 and 7 are flow charts illustrating another examples of the signal recording operation of a recording and reproducing system according to the invention;

Figs. 8a through 8c are timing charts illustrating the signal recording operation of the recording and reproducing system according to the invention;

Fig. 9 is a flow chart illustrating another example of the signal reproducing operation of the recording and reproducing system according to the invention; and

Fig. 10 is a timing chart illustrating the signal reproducing operation of the recording and reproducing system according to the invention.

## DETAILED DESCRIPTION OF THE PREFERRED EMBODIMENTS

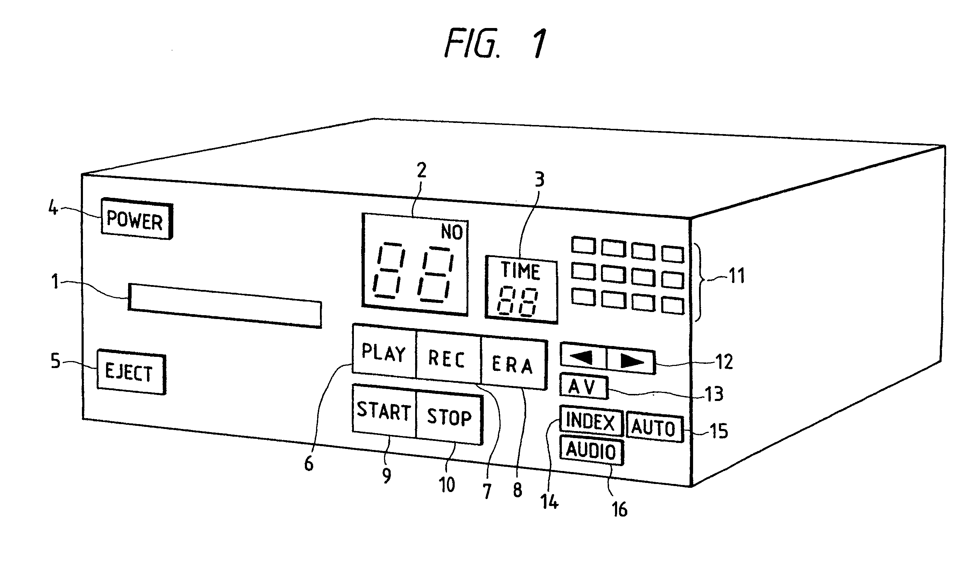

Fig. 1 is a perspective view showing the external appearance of one application of a recording and reproducing system according to this invention.

An opening 1 receives a magnetic disk which is loaded in the device, display section 2 displays a track number, display section 3 displays a time such as a desired reproducing time for a video signal, and various switches are provided on a front panel of the device.

A power switch 4 is operated to connect or disconnect the device to a power source, and an eject switch 5 is operated to eject the magnetic disk from the device. A play switch (PLAY) 6, a record switch (REC) 7, and an erase switch (ERA) 8 are operated to select a signal reproducing (playback) mode, a signal recording mode, and a signal erasing mode, respectively. A start switch (START) 9 and a stop switch (STOP) 10 are operated to start and stop the operating modes described above.

A ten-key pad 11 enables input of numerical data. A move switch 12 is operated to facilitate access to the track which is located one track radially inward or outward from the current track. An AV mode switch 13 is operated to select the AV mode. An index switch (INDEX) 14 is operated to record index signals. An auto switch (AUTO) 15 is operated to automatically make access to tracks one after another. A sound receiving switch (AUDIO) 16 is operated to start to receive audio signals or to stop the reception of audio signals The stop switch 10 may be operated to stop the reception of audio signals.

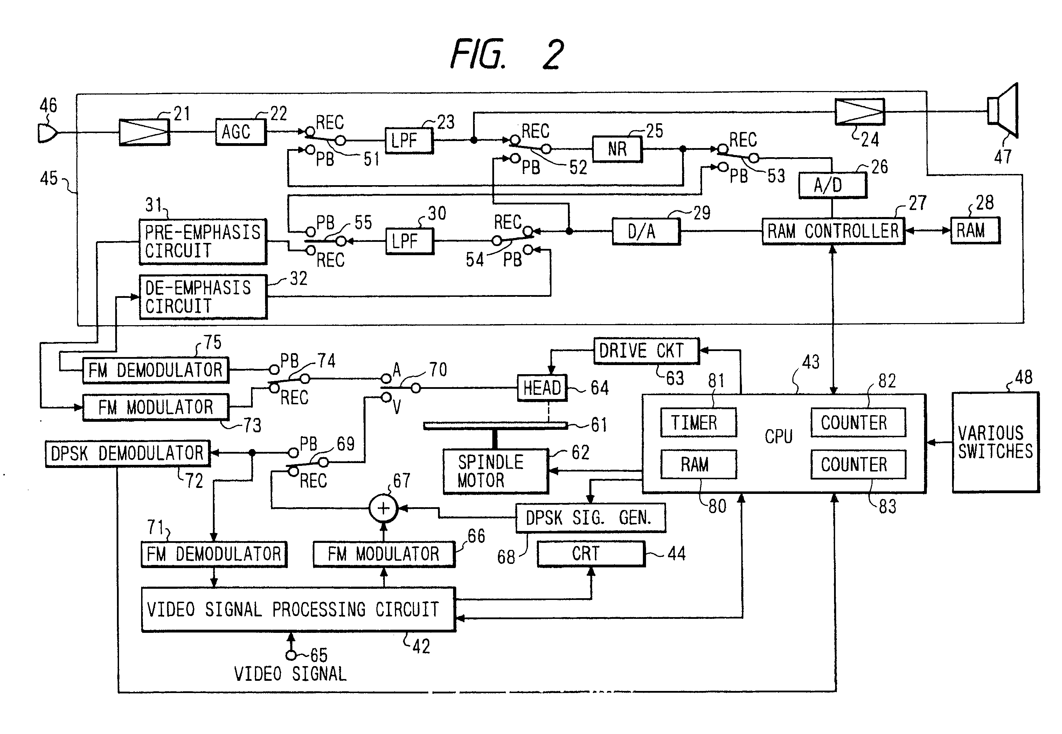

Fig. 2 is a block diagram showing the electrical arrangement of one example of the recording and reproducing system of the invention.

In the recording and reproducing system, as shown in Fig. 2, a disk 61 is rotated by a spindle motor 62, which is controlled by a CPU (central processing unit) 43 comprising a microcomputer. A drive circuit 63 connected to the CPU 43 positions a magnetic head 64 at a desired track. The CPU 43 receives signals which are provided when various switches 48 provided on the front panel of the device (shown in Fig. 1) are operated.

A video signal is input through an external input terminal 65, to which an image pickup circuit including an image pickup element such as a CCD (charge coupled device) is connected. The video signal is applied to a video signal processing circuit 42 where it is processed as normally required. The output of the video signal processing circuit 42 is applied to an FM modulator 66, where it is FM-modulated. The output of the FM modulator 66 is supplied to an adder 67. The adder 67 adds the output of the FM modulator 66 to the DPSK (differential phase shift keying) signal corresponding to the ID codes output by a DPSK signal generator 68. The result of the addition is applied through switches 69 and 70 to the magnetic head 64.

An output video signal from the magnetic head 64 is applied through the switch 70 and a switch 69 to an FM demodulator 71 and a DPSK demodulator 72. The FM demodulator 71 and the DPSK demodulator 72 separate, extract and demodulate the signals respectively. The demodulated video signal is then applied to the video signal processing circuit 42. The video signal processing circuit 42 processes the demodulated video signal and outputs it to a CRT 44. The demodulated signal from the DPSK demodulator 72 is applied to the CPU 43. The CPU 43 reads the modulated signal as the ID codes.

In a an audio signal processing circuit 45, a recording audio signal input through a microphone 46 is supplied to a RAM (random access memory) 28 through an amplifier 21, an automatic gain control (AGC) circuit 22, a switch 51, a low-pass filter (LPF) 23, a switch 52, a noise reduction (NR) circuit 25, a switch 53, an A/D (analog-to-digital) converter 26, and a RAM controller 27. The recording audio signal read out of the RAM 28 is applied through the RAM controller 27, a D/A converter 29, a switch 54, a low-pass filter 30, a switch 55, a pre-emphasis circuit 31, an FM modulator 73, a switch 74 and the switch 70 to the head 64, so that it is recorded on the disk 61. The reproducing audio signal output from the head 64 is applied through the switches 70 and 74, an FM demodulator 75, a de-emphasis circuit 32, the switch 54, the low-pass filter 30, the switch 55, the switch 53, the A/D converter 26, and the RAM controller 27 to the RAM 28, where it is stored. The reproducing audio signal read out of the RAM 28 is applied to the loudspeaker 47 through the RAM controller 27, the D/A converter 29, the switch 52, the noise reduction circuit 25, the switch 51, the low-pass filter 23, and the amplifier 24.

Further, in Fig. 2, the CPU 43, in response to outputs from various switches 48 (corresponding to the switches 6 through 16 in Fig. 1), the video signal processing circuit 42 and the audio signal processing circuit 45, controls the audio signal and video signal recording and reproducing operations. Furthermore, the CPU 43 includes a RAM (random access memory) 80. The CPU 43 further includes a timer 81 for video signal reproducing time, a counter 82 for track number, and a counter 83 for variable i, which will be described later. In addition, the CPU 43 controls the switches 51 through 55 and the switches 69 and 74 in such a manner that the armature of each of these switches is tripped over to the contact REC when a signal recording mode is set, and the armature of each of these switches is tripped over to the contact PB when a signal reproducing mode is set. Further, the CPU controls the switch 70 in such a manner that the armature of the switch is tripped over to the contact A when an audio signal is recorded or reproduced, and the armature of the switch is tripped over to the contact V when a video signal is recorded or reproduced.

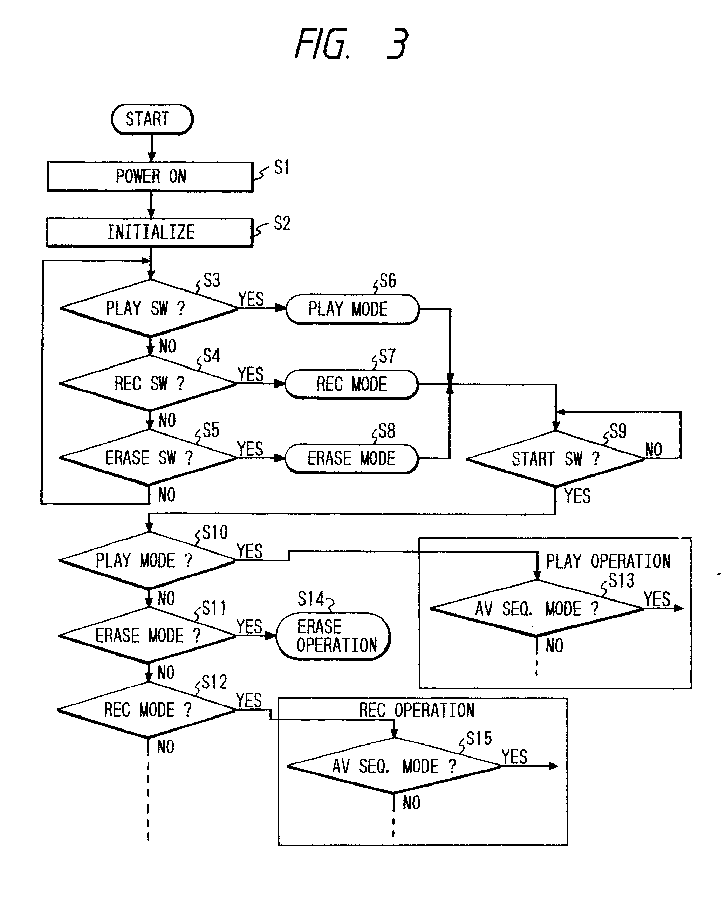

Now, the operation of the recording and reproducing system illustrated in Fig. 2 will be described with reference to the flow chart of Fig. 3.

When the power switch 4 is turned on, the various circuits of the recording and reproducing system are electrically energized and initialized as required (Steps S1 and S2). Next, it is determined whether or not the play switch 6, the record switch 7 or the erase switch 8 have been operated (steps S3, S4 and S5). In response to the operations of the play switch 6, the record switch 7 and the erase switch 8, the signal processing modes, namely, the signal reproducing mode, the signal recording mode and the signal erasing mode are set, respectively (Steps S6, S7 and S8).

Thereafter, it is determined whether or not the start switch 9 has been operated (Step S9). Once it is determined that the start switch 9 has been operated, a signal reproducing operation, a signal recording operation or a signal erasing operation is started in accordance with the one of the signal processing modes previously set (Steps S10 through S15).

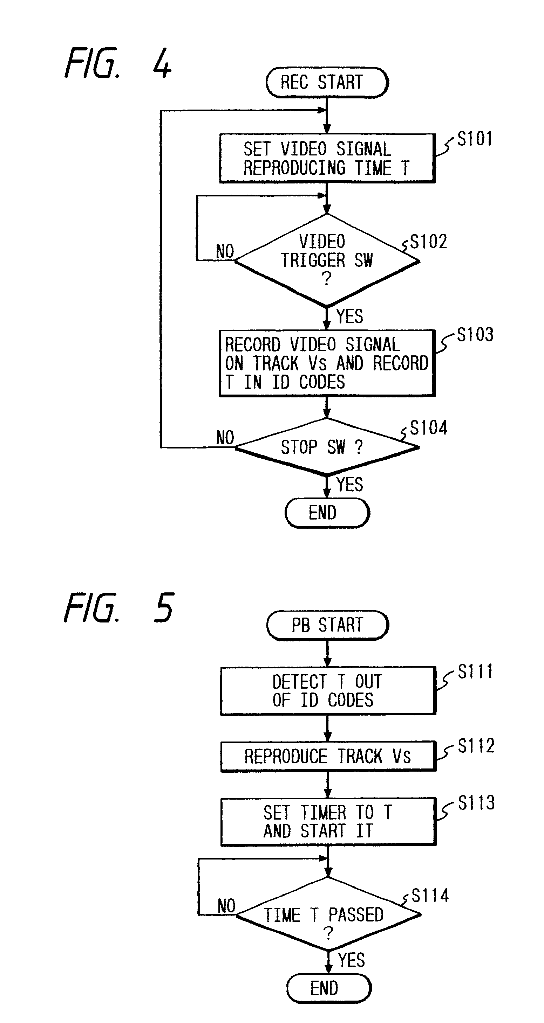

Supposing only one video signal is recorded, the operations as shown in the flow chart in Fig. 4 are executed in the signal recording mode.

When the operator operates the ten-key pad 11 to set a video signal reproducing time T, the value input is stored in the RAM 80 in the CPU 43 (Step S101). Further, the counter 82 for track number is set to a value specified by the operator. When a video trigger switch (for instance, the start switch 9 or a dedicated switch) is operated, the video signal input through the external input terminal 65 at that time instant is recorded on the current track $V_9$ where the head 64 is positioned, and the reproducing time T is recorded on the same track using the user's area in the ID codes (Steps S102 and S103). Here, the reproducing time T is added as a DPSK signal to the modulated video signal and applied to the head 64. Further, the video recording format applied to the present invention is proposed in "CPZ-250, SPECIFICATION OF STILL VIDEO FLOPPY DISC SYSTEMS " published by Engineering Department, Electronic Industries Association of Japan, in September 1987. Thereafter, if the stop switch 10 is operated, then the recording operation is ended (Step S104).

The recorded video signal is reproduced in accordance with the flow chart in Fig. 5.

When the operator operates the ten-key pad 11 so as to cause the head 64 to move to the track $V_s$ where the video signal and ID codes have been recorded, the reproducing time T is detected out of the ID codes (Step S111). Then, the video signal recorded on the track $V_s$ is reproduced, and the CPU 43 sets the timer 81 to the time T and starts it (Steps S112 and S113). Thereafter, when the timer 81 has counted down to zero, that is, when the time T has passed, the reproducing operation is ended (Step S114).

Incidentally, in a conventional electronic still camera, audio signals recorded in a plurality of tracks can be provided for a video signal recorded in a single track, but video signals recorded in a plurality of tracks cannot be provided for an audio signal recorded in a single track. Hence, it is difficult to successfully reproduce different video signals while an audio signal is being continuously reproduced.

According to the present invention, the above-described problem can be solved. With this matter, the operations of the system in the AV mode will be described hereinafter.

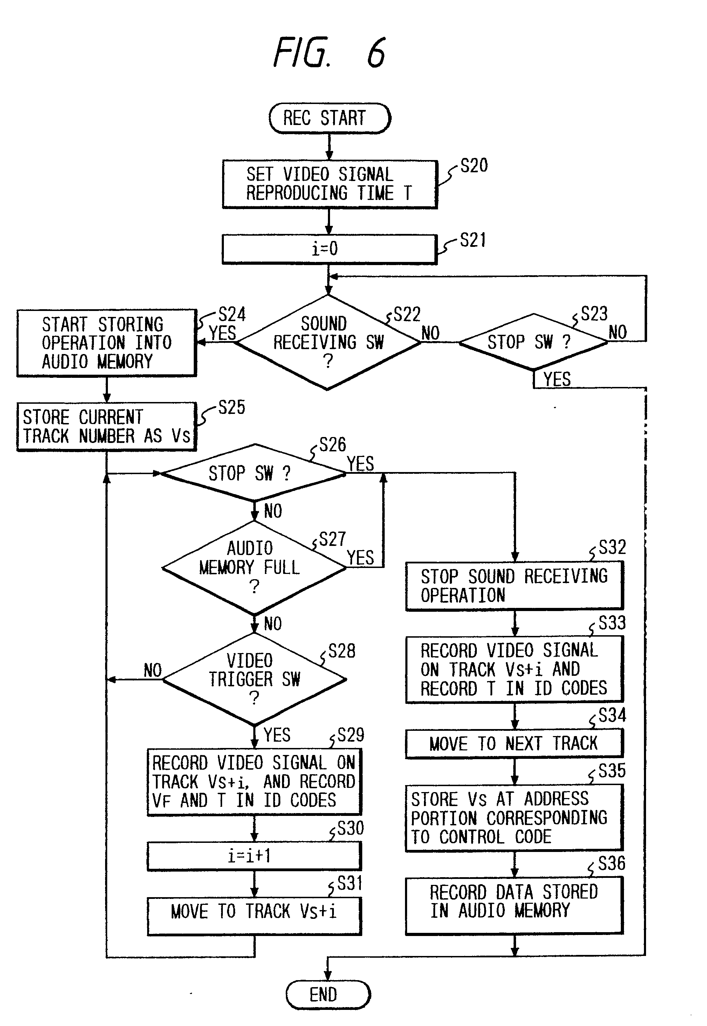

In the signal recording mode, when the AV mode switch 13 is operated to specify the AV mode, the CPU 43 operates as shown in the flow chart of Fig. 6.

When the operator operates the ten-key pad 11 to set a video signal reproducing time T, the value input is stored in the RAM 80 in the CPU 43 (Step S20). Thereafter, the variable i is set to "0" in the counter 83, the counter 82 for track number is set to a value specified by the operator, and the CPU 43 waits until the sound receiving switch 16 is operated (Steps S21 and S22). If the stop switch 10 is operated before the sound receiving switch 16 is operated, then the recording operation is suspended (Step S23).

When the sound receiving switch 16 is operated, a sound receiving operation or a storing operation into the audio memory (RAM 28) is started (Step S24). That is, the audio signal received through the microphone 46 is applied to the audio signal processing circuit 45. In the audio signal processing circuit 45, the audio signal received is amplified by the amplifier 21, adjusted to a predetermined level by the automatic gain control circuit 22, and applied to the low-pass filter 23 through switch 51, so that unnecessary high frequency components are removed from the audio signal. The output of the low-pass filter 23 is applied through the switch 52 to the noise reduction circuit 25, so that it is compressed for noise reduction. The output of the noise reduction circuit 25 is applied through the switch 53 to the A/D converter 26, where it is subjected to analog-to-digital conversion. The resultant digital signal is applied through the RAM controller 27 to the RAM 28, where it is stored. Further, the number of the track where the head 64 is currently positioned is stored as $V_s$ in the RAM 80 in the CPU 43 (Step S25). The above sound receiving operation is carried out continuously until the stop switch 10 is operated or the audio memory (RAM 28) becomes full (Steps S26 and S27). At the same time, a part of the audio signal being received which has passed through the low-pass filter 23 is supplied through the amplifier 24 to the loudspeaker 47 so as to be monitored.

When a video trigger switch (for instance, the start switch 9 or a dedicated switch) is operated during the sound receiving operation, the video signal input through the external input terminal 65 at that time instant is recorded on the current track $V_{s+i}$ ($V_s$ at first because i = 0) where the magnetic head 64 is positioned, and the number $V_F$ - ($=v_{s+i+1}$) of the next track (for example, the track radially inward next to the current track) and the reproducing time T are recorded on the track $V_{s+i}$ using the user's area in the ID codes (Steps S28 and S29). Here, the data on the next track number $V_F$ and the reproducing time T is output as a DPSK signal from the DPSK signal generator 68. The DPSK signal is added to the FM-modulated video signal (through frequency multiplexing), and applied to the head 64 to record.

In this operation, the spindle motor 62 is controlled by the CPU 43, to rotate the disk 61, for instance, at a speed of 3600 rpm (in the case of the NTSC system). As a result, the FM-modulated video signal of, for instance, one field, and the DPSK signal containing data on the next track number $V_F$ and the desired reproducing time T, are recorded in a single predetermined track.

Upon completing the recording of the video signal, the variable i is increased by one in the counter 83, and the magnetic head 64 is moved radially inward to the next track $V_{s+i}$, and Step S26 is effected again (Steps S29, S30 and S31).

The above-described operations are repeatedly carried out, so that the video signals corresponding to the audio signal being received are recorded on a plurality of tracks.

When the stop switch 10 is operated or the audio memory becomes full during the sound receiving operation, the sound receiving operation is suspended, the last video signal is recorded on the track $V_{s+i}$, and the reproducing time T is recorded on the same track using the user's area in the ID codes (Steps S32 and S33). In this case, the next track number is not recorded.

The magnetic head 64 is moved radially inward to the next track (Step S34). Then, the number $V_s$ of the first video track is stored at an address portion corresponding to the control code (for example, word W3), in the audio memory (Step S35). Finally, the data stored in the audio memory is recorded on the disk by the CPU 43 (Step S36). Namely, the data read out of the RAM 28 is applied through the RAM controller 27 to the D/A converter 29, where it is subjected to a digital-to-analog conversion. The output of the D/A converter 29 is supplied through the switch 54 to the low-pass filter 30, so that the unnecessary high frequency components are removed from the audio signal. The resultant audio signal is applied to the pre-emphasis circuit 31, where it is subjected to pre-emphasis. The output of the pre-emphasis circuit 31 is applied to the FM-modulator 73. The FM-modulated audio signal from the FM-modulator 73 is applied through the switches 74 and 70 to the head 64, and recorded on the next track which is located radially inward from the track where the last video signal has been recorded. Further, the audio recording format applied to the present invention is proposed in "CPZ-250, SPECIFICATION OF STILL VIDEO FLOPPY DISC SYSTEMS " published by Engineering Department, Electronic Industries Association of Japan, in September 1987.

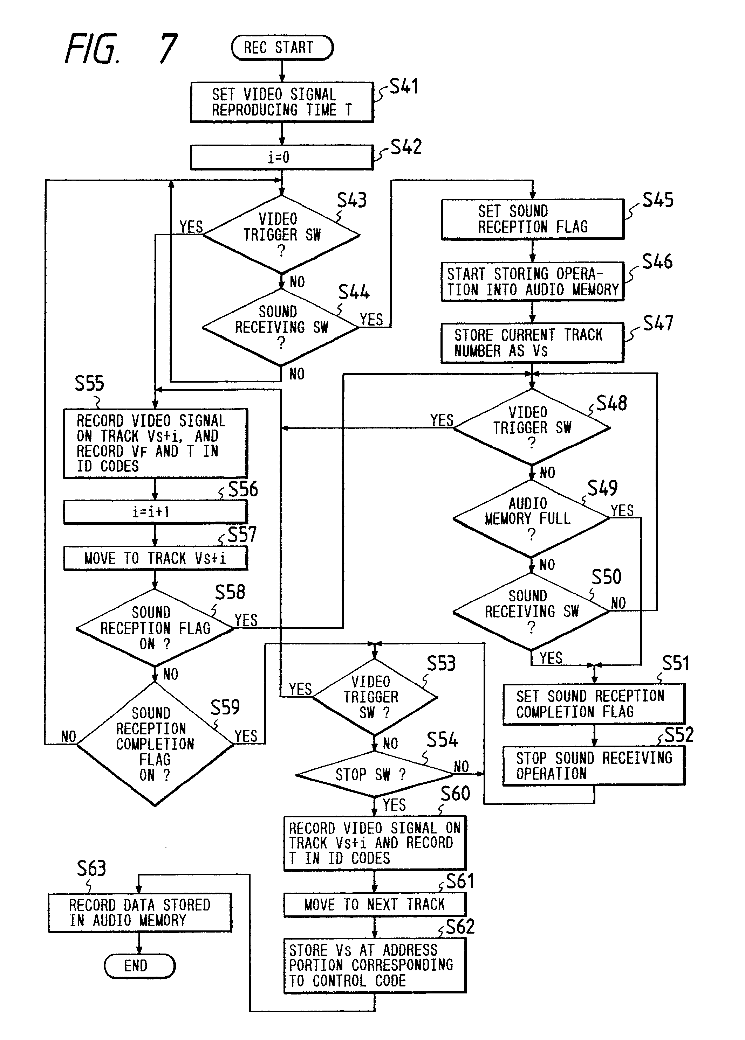

Fig. 7 is a flow chart showing another example of the signal recording operation of the recording and reproducing system according to the invention.

In the signal recording operation, when the operator operates the ten-key pad 11 to set a video signal reproducing time T, the value is stored in the RAM 80 in the CPU 43 (Step S41). Thereafter, the variable i is set to "0" in the counter 83 (Step S42). Further, the counter 82 for track number is set to a value specified by the operator. The CPU 43 waits until the video trigger switch or the sound receiving switch 16 is operated (Steps S43 and S44).

When the sound receiving switch 16 operated, a sound reception flag is set, and the sound receiving operation, that is, the storing operation into the audio memory (RAM 28) is started (Steps S45 and S46). Then, the number $V_s$ of the current track where the head 64 is positioned is stored in the RAM 80 in the CPU 43 (Step S47). The above sound receiving operation is continued until the audio memory becomes full or the sound receiving switch 16 is operated again, unless the video trigger switch is operated (Steps S48 through S50). When the audio memory becomes full or the sound receiving switch 16 is operated again, a sound reception completion flag is set (the sound reception flag is reset) and the sound receiving operation is suspended (Steps S51 and S52).

When before, during or after the sound receiving operation, the video trigger switch is turned on before the stop switch 10 is operated, the video signal is recorded on the track $V_{s+i}$ ($V_s$ at first because i = 0), and also the next track number $V_F$ - ($=V_{s+i+1}$) and the reproducing time T are recorded

on the track $V_{s+1}$ using the user's area in the ID codes (Steps S43, S44, S48, S53, S54 and S55). In addition, the variable i is increased by one in the counter 83, and the magnetic head 64 is moved radially inward to the next track $V_{s+i}$, (Steps S56 and S57). Where the sound reception flag is on (Step S58), the sound receiving operation is carried out, thus Step S48 is effected so that the sound receiving operation is continued. Where the sound reception completion flag is on, the sound receiving operation has ended, and therefore Step S53 is effected, so that the CPU 43 waits until the video trigger switch or the stop switch 10 is operated.

When, with the sound reception completion flag on, the stop switch 10 is operated, the last video signal is recorded on the track $V_{s+i}$ and the reproducing time T is recorded on the same track using the user's area in the ID codes (Step S60). In this operation, the next video track number $V_s$ is not recorded on the track $V_{s+i}$. Thereafter, the magnetic head 64 is further moved radially inward to the next track (Step S61). Then, the number $V_s$ of the first video track is stored at an address portion corresponding to the control code, in the audio memory (Step S62). After that, the data stored in the audio memory is recorded on the disk (Step S63).

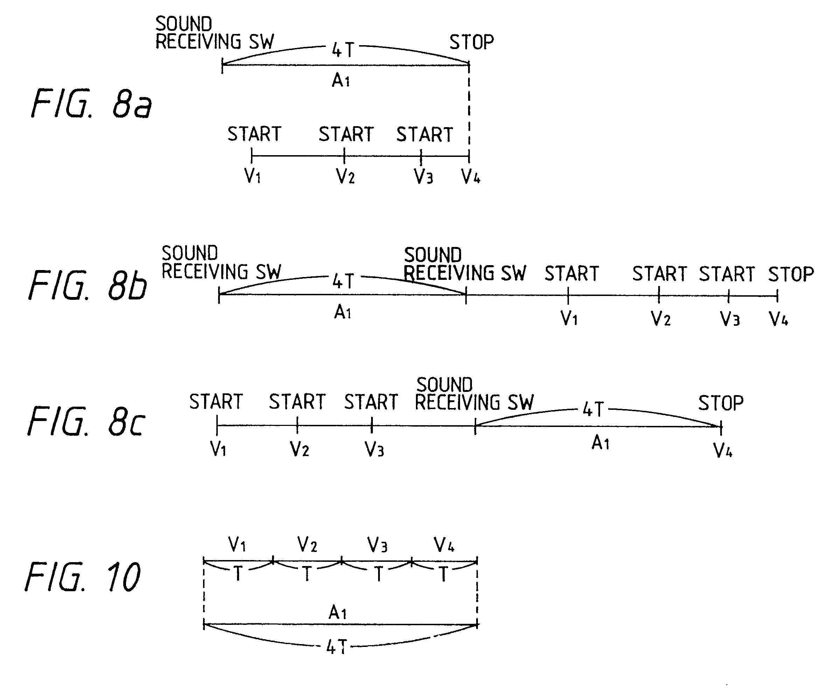

Figs. 8a through 8c are timing charts illustrating three examples of the signal recording operation. Fig. 8a shows the case where the sound receiving operation and the video signal recording operation are carried out in parallel, Fig. 8b shows the case where the video signal recording operation is carried out after the sound receiving operation is accomplished, and Fig. 8c shows the case where the video signal recording operation is started before the sound receiving operation is started.

In Fig. 8a, after the sound receiving operation is started by turning on the sound receiving switch 16, the start switch 9 is turned on voluntarily (three times in the embodiment), and the stop switch 10 is turned on when a sound receiving time (4T in the embodiment) has passed. As a result, video signals $V_1$ through $V_4$ are recorded in first through fourth tracks located radially inward in the stated order, respectively. The number of the second track is recorded in the first track as the DPSK signal, the number of the third track is recorded in the second track as the DPSK signal, and the number of the fourth track is recorded in the third track as the DPSK signal. In addition, the reproducing time T is recorded as the DPSK signal in the first through fourth tracks respectively. Furthermore, in the fifth track located radially inward next to the fourth track, an audio signal $A_1$ lasting for the time 4T corresponding to these video signals is recorded through time-axis compression. The control code for the fifth track includes the number of the first track.

In Fig. 8b, after the sound receiving operation is started by turning on the sound receiving switch 16, the switch 16 is turned on again when a sound receiving time (4T) has passed. Thereafter, the start switch 9 is turned on voluntarily (three times), and finally the stop switch 10 is turned on.

In Fig. 8c, after the start switch 9 is turned on voluntarily (three times), the sound receiving switch 16 is turned on to start the sound receiving operation, and the stop switch 10 is turned on when a sound receiving time (4T) has passed.

Further, in the examples shown in Figs. 8b and 8c, the video signals $V_1$ through $V_4$ and the audio signal $A_1$ are recorded on the disk in the same manner as in Fig. 8a.

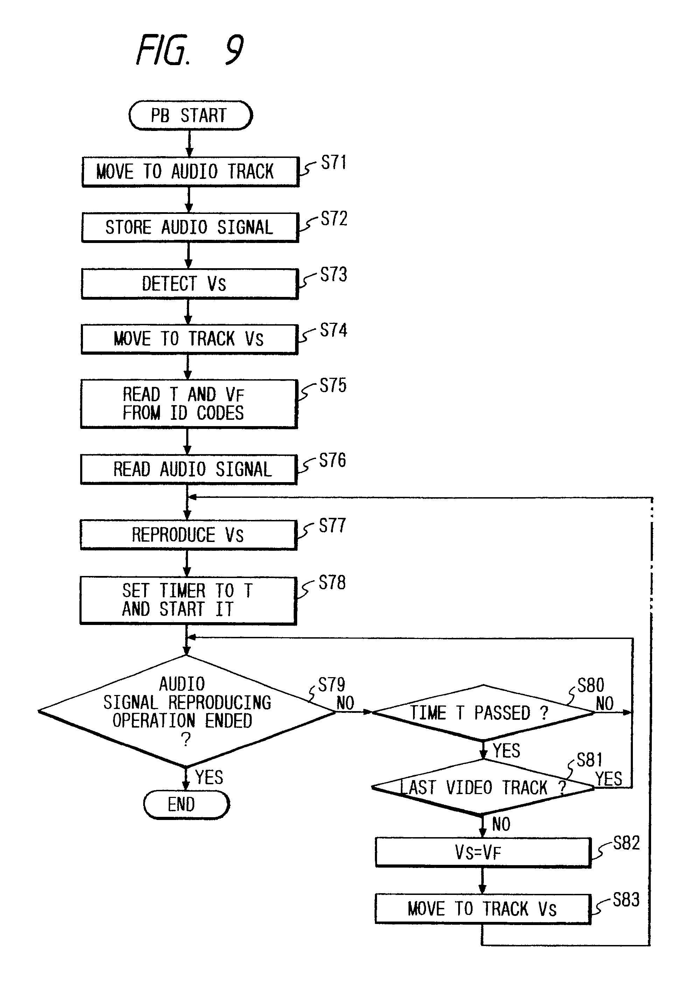

The signal reproducing operation of the recording and reproducing system will be described with reference to Fig. 9.

When the signal reproducing mode is selected, the magnetic head 64 is moved to the track where an audio signal has been recorded. The audio signal (data) is then reproduced and stored in the audio memory (Steps S71 and S72). That is, the reproducing signal from the audio track is FM-demodulated by the FM-demodulator 75, end is then subjected to de-emphasis in the de-emphasis circuit 32. The output audio signal of the de-emphasis circuit 32 is applied through the switch 54 to the low-pass filter 30, where unwanted high frequency components are removed therefrom. The audio signal passed through the low-pass filter 30 is applied through the switches S5 and S3 to the A/D converter 26, where it is subjected to analog-to-digital conversion. The output audio signal of the A/D converter 26 is applied through the RAM controller 27 to the RAM 28, where it is stored.

The RAM controller 27 detects, from the control code included in the audio signal, the number $V_s$ of the track where the first video signal corresponding to the audio signal has been recorded, and applies it to the CPU 43 (Step S73).

Next, the magnetic head 64 is moved to the track $V_s$, where the corresponding first video signal has been recorded, and the time T and the next track number $V_F$ are read from the DPSK signal (ID codes) reproduced therefrom (Steps S74 and S75). Then, the audio signal is read out of the audio memory (RAM 28) through time-axis expansion, and simultaneously the reproduction of the video signal on the track $V_s$ is started (Steps S76 and S77).

Thus, the CPU 43 operates to move the magnetic head 64 to the track which has the number read from the control code. The FM video signal reproduced by the magnetic head 64 therefrom is applied through the switches 70 and 69 to the FM demodulator 71 and the DPSK demodulator 72.

The DPSK demodulator 72 extracts the frequency band of the DPSK signal from the input signal, and demodulates it as the ID codes. The ID codes are applied to the CPU 43.

The audio signal stored in the audio memory is read out through time-axis expansion, and is then subjected to digital-to-analog conversion by the D/A converter 29. The signal thus processed is applied to the loudspeaker 47.

On the other hand, the FM demodulator 71 extracts the frequency band of the video signal from the input signal, and demodulates it. The demodulated signal is supplied to the video signal processing circuit 42. The video signal processing circuit 42 processes the video signal, for instance, by de-emphasis, and then supplies the processed video signals to the CRT 44.

Thus, when the video signal reproducing operation is started, the CPU 43 sets the timer 81 to the time T and starts it (Step S78). If, when the timer has counted down to zero, that is, when the time T has passed, before the audio signal reproducing operation is ended, the track is not the last video track, then the CPU 43 sets as $V_s = V_F$, and moves the magnetic head 64 radially inward to the next track $V_s$ where the next video signal has been recorded, to reproduce the next video signal (Steps S79 through S83). Thus, the series of video signals recorded in the tracks are reproduced successively in such a manner that they are each reproduced for the same time T recorded in advance. The reproducing operation is ended when the audio signal reproducing operation is ended, because, in the last video track, the number of the next video track is not recorded in the ID codes.

The timing for the above-described reproducing operation is illustrated in a timing chart of Fig. 10. **When the** reproducing operation is started, the first through the last video signals $V_1$ through $V_4$ are each reproduced for the same time T in the stated order, while the corresponding audio signal $A_1$ is continuously reproduced for the period of time 4T. Further, although the reproducing times for the video signals are all set to the same value in the above-described embodiment, the reproducing times may be set to different values for each of the video signals.

As is apparent from the above description, according to the present invention, the reproducing time for a video signal can be set voluntarily.

**Claims**

1.  A recording and reproducing system comprising:
    set means for setting a desired reproducing time for a video signal to be recorded;
    trigger switch means;

record means for recording the video signal and data for the desired reproducing time on a recording medium, in response to an operation for said trigger switch means;
    reproduction means for reproducing the video signal and data for the desired reproducing time for the video signal from the recording medium;
    detection means for detecting said data for the desired reproducing time from the reproduced signal; and
    control means for causing said reproduction means to reproduce the video signal for the desired reproducing time on the basis of said data detected.

2.  A recording and reproducing system as recited in claim 1, wherein said recording medium is a disk.

3.  A recording and reproducing system as recited in claim 2, wherein said system is operable in an AV mode for recording an audio signal and a plurality of video signals in combination on respective tracks of the disk, and data for reproducing said plurality of video signals in sequence is recorded on the disk.

4.  A recording and reproducing system as recited in claim 3, wherein said data is an indicator indicating the number of a next track in which a next video signal following the current video signal is to be recorded.

5.  A recording device comprising:
    set means for setting a desired reproducing time for a video signal to be recorded;
    trigger switch means; and
    record means for recording the video signal and data for the desired reproducing time on a recording medium, in response to an operation for said trigger switch means.

6.  A recording device as recited in claim 5, wherein said recording medium is a disk.

7.  A recording device as recited in claim 6, wherein said device is operable in an AV mode for recording an audio signal and a plurality of video signals in combination on respective tracks of the disk, and data for reproducing said plurality of video signals in sequence is recorded on the disk.

8.  A recording device as recited in claim 7, wherein said data is an indicator indicating the number of a next track in which a next video signal following the current video signal is to be recorded.

9. A reproducing device comprising:

reproduction means for reproducing a recording medium in which a video signal and data for a desired reproducing time for the video signal;

detection means for detecting said data for the desired reproducing time from the recording medium; and

control means for causing said reproduction means to reproduce the video signal for the desired reproducing time on the basis of said data detected.

10. A reproducing device as recited in claim 9, wherein said recording medium is a disk.

11. A reproducing device as recited in claim 10, wherein said device is operable in an AV mode for reproducing an audio signal and a plurality of video signals recorded in combination on respective tracks of the disk.

12. A recording and reproducing method comprising the steps of:

setting a desired reproducing time for a video signal to be recorded;

providing trigger switch means;

recording the video signal and data for the desired reproducing time on a recording medium, in response to an operation for said trigger switch means;

reproducing the video signal and data for the desired reproducing time for the video signal from the recording medium;

detecting said data for the desired reproducing time from the reproduced signal; and

causing said reproduction means to reproduce the video signal for the desired reproducing time on the basis of said data detected.

FIG. 1

EP 0 444 512 A2

FIG. 2

## FIG. 3

```
        ( START )
            │
            ▼
    ┌──────────────┐  S1
    │   POWER ON   │
    └──────────────┘
            │
            ▼
    ┌──────────────┐  S2
    │  INITIALIZE  │
    └──────────────┘
            │
   ┌────────┤
   │        ▼
   │      S3                        S6
   │    ╱ PLAY   ╲  YES    ╭─────────────╮
   │   ╱  SW ?    ╲──────▶│  PLAY MODE  │───┐
   │    ╲        ╱         ╰─────────────╯   │
   │      ╲    ╱                             │
   │        │ NO                             │
   │        ▼  S4                      S7    │
   │    ╱ REC    ╲  YES    ╭─────────────╮   │
   │   ╱  SW ?    ╲──────▶│  REC MODE   │───┤
   │    ╲        ╱         ╰─────────────╯   │
   │      ╲    ╱                             │
   │        │ NO                             │
   │        ▼  S5                      S8    ▼
   │    ╱ ERASE  ╲  YES    ╭─────────────╮        S9
   │   ╱  SW ?    ╲──────▶│ ERASE MODE  │───▶ ╱ START  ╲  NO
   │    ╲        ╱         ╰─────────────╯     ╲ SW ?   ╱────┐
   │      ╲    ╱                                ╲      ╱     │
   │        │ NO                                  │ YES      │
   └────────┘                                     │          │
                                                  │          │
        ┌─────────────────────────────────────────┘          │
        ▼  S10
    ╱ PLAY     ╲  YES    ┌───────────────────────────────┐
   ╱  MODE ?    ╲──────▶ │              PLAY OPERATION    │
    ╲          ╱         │               S13             │
      ╲      ╱           │   ╱ AV SEQ.    ╲  YES         │
        │ NO             │  ╱  MODE ?      ╲──────▶      │
        ▼  S11      S14  │   ╲            ╱              │
    ╱ ERASE    ╲  YES ╭──────╮╲          ╱              │
   ╱  MODE ?    ╲───▶│ ERASE ││   │ NO                 │
    ╲          ╱      │OPERA- ││   ⋮                    │
      ╲      ╱        │ TION  │└───────────────────────────────┘
        │ NO          ╰──────╯
        ▼  S12
    ╱ REC      ╲  YES    ┌───────────────────────────────┐
   ╱  MODE ?    ╲──────▶ │          REC OPERATION        │
    ╲          ╱         │               S15            │
      ╲      ╱           │   ╱ AV SEQ.    ╲  YES        │
        │ NO             │  ╱  MODE ?      ╲──────▶     │
        ⋮                │   ╲            ╱             │
        ⋮                │     ╲        ╱              │
                         │       │ NO                 │
                         │       ⋮                    │
                         └───────────────────────────────┘
```

## FIG. 4

REC START

SET VIDEO SIGNAL
REPRODUCING TIME T — S101

VIDEO
TRIGGER SW
? — S102

NO

YES

RECORD VIDEO SIGNAL
ON TRACK Vs AND RECORD
T IN ID CODES — S103

STOP SW ? — S104

NO

YES

END

## FIG. 5

PB START

DETECT T OUT
OF ID CODES — S111

REPRODUCE TRACK Vs — S112

SET TIMER TO T
AND START IT — S113

TIME T PASSED
? — S114

NO

YES

END

12

## FIG. 6

FIG. 7

Flowchart:

REC START

SET VIDEO SIGNAL REPRODUCING TIME T — S41

i=0 — S42

VIDEO TRIGGER SW ? — S43
- YES
- NO → SOUND RECEIVING SW ? — S44
  - YES → SET SOUND RECEPTION FLAG — S45
    - START STORING OPERATION INTO AUDIO MEMORY — S46
    - STORE CURRENT TRACK NUMBER AS Vs — S47
    - VIDEO TRIGGER SW ? — S48
      - YES
      - NO → AUDIO MEMORY FULL ? — S49
        - YES
        - NO → SOUND RECEIVING SW ? — S50
          - NO
          - YES → SET SOUND RECEPTION COMPLETION FLAG — S51
            - STOP SOUND RECEIVING OPERATION — S52
  - NO

RECORD VIDEO SIGNAL ON TRACK Vs+i, AND RECORD VF AND T IN ID CODES — S55

i=i+1 — S56

MOVE TO TRACK Vs+i — S57

SOUND RECEPTION FLAG ON ? — S58
- YES
- NO → SOUND RECEPTION COMPLETION FLAG ON ? — S59
  - NO
  - YES

VIDEO TRIGGER SW ? — S53
- YES
- NO → STOP SW ? — S54
  - NO
  - YES → RECORD VIDEO SIGNAL ON TRACK Vs+i AND RECORD T IN ID CODES — S60
    - MOVE TO NEXT TRACK — S61
    - STORE Vs AT ADDRESS PORTION CORRESPONDING TO CONTROL CODE — S62

RECORD DATA STORED IN AUDIO MEMORY — S63

END

14

## FIG. 8a

SOUND
RECEIVING SW

4T

STOP

A₁

START   START   START

V₁      V₂      V₃   V₄

## FIG. 8b

SOUND
RECEIVING SW

4T

SOUND
RECEIVING SW   START   START START STOP

A₁

V₁      V₂      V₃   V₄

## FIG. 8c

START   START   START   SOUND
RECEIVING SW

4T

STOP

V₁      V₂      V₃

A₁      V₄

## FIG. 10

V₁      V₂      V₃      V₄

T       T       T       T

A₁

4T

# FIG. 9

PB START

MOVE TO AUDIO TRACK — S71

STORE AUDIO SIGNAL — S72

DETECT Vs — S73

MOVE TO TRACK Vs — S74

READ T AND VF FROM ID CODES — S75

READ AUDIO SIGNAL — S76

REPRODUCE Vs — S77

SET TIMER TO T AND START IT — S78

AUDIO SIGNAL REPRODUCING OPERATION ENDED ? — S79 NO

TIME T PASSED ? — S80 NO

YES

LAST VIDEO TRACK ? — S81 YES

NO

Vs=VF — S82

MOVE TO TRACK Vs — S83

YES

END